# FASCICULE DE BREVET EUROPEEN

(11) **EP 1 147 389 B1**
(45) Date de publication et mention de la délivrance du brevet: **20.11.2002**
(21) Numéro de dépôt: 99964725.8
(22) Date de dépôt: 28.12.1999
(51) Int. Cl.: G01J 5/20

(54) **DETECTEUR BOLOMETRIQUE A ANTENNE**
BOLOMETRISCHER DETEKTOR MIT EINER ANTENNE
BOLOMETRIC DETECTOR WITH ANTENNA

(30) Priorité: 30.12.1998 FR 9816648
(43) Date de publication de la demande: 24.10.2001
(73) Titulaire: COMMISSARIAT A L'ENERGIE ATOMIQUE, 75752 Paris Cédex 15 (FR)
(72) Inventeur: AGNESE, Patrick, F-38340 Voreppe (FR)
(74) Mandataire: Poulin, Gérard
(86) Numéro de dépôt international: FR9903301
(87) Numéro de publication internationale: WO00040937

(56) Documents cités:
- WO-A-93/25877
- WO-A-97/21250
- US-A- 5 171 733
- OSTERMAN, PATT, HUNT, PETERSON: "Antenna-coupled bolometer with a micromachined-beam thermal link" APPLIED PHYSICS LETTERS, vol. 71, no. 16, 20 octobre 1997 (1997-10-20), pages 2361-2363, XP000725894 cité dans la demande

## Description

### Domaine technique et art antérieur

L'invention concerne un détecteur bolométrique à antenne ainsi qu'un procédé de fabrication d'un tel détecteur.

L'invention s'applique plus particulièrement à la détection passive d'ondes électromagnétiques de longueurs d'onde millimétriques.

La détection est dite passive quand la scène observée émet, à elle seule, le signal à détecter soit, directement, par émission propre du corps gris qu'elle constitue, soit, indirectement, par réflexion sur un autre corps gris.

La détection passive d'ondes millimétriques repose actuellement sur deux principes différents.

Selon un premier principe, l'onde électromagnétique est détectée par une antenne de façon à créer un signal électrique dont le traitement est effectué par un circuit électronique fonctionnant à la fréquence de l'onde. Selon le deuxième principe, l'onde électromagnétique est détectée par une antenne de façon à créer un flux calorifique qui est mesuré.

Un inconvénient des détecteurs fonctionnant selon le premier principe est d'être limité en fréquence.

En effet, les technologies utilisées pour réaliser de tels circuits, telles que les technologies à base d'arséniure de gallium (AsGa) ou de phosphure d'indium (InP), sont actuellement inaccessibles à des fréquences dépassant, par exemple, 100 GHz.

Par ailleurs, dans le cas où les détecteurs doivent être rassemblés sous forme de matrice de nxm détecteurs, de tels circuits présentent une dissipation élevée, par exemple de l'ordre de 1 watt pour une matrice 32x32. Ceci présente un autre inconvénient.

Les détecteurs fonctionnant selon le deuxième principe constituent la famille des détecteurs bolométriques.

La détection bolométrique est telle que la puissance de l'onde électromagnétique qui est recueillie par l'antenne est convertie dans une charge résistive en une puissance calorifique qui est mesurée. La mesure de la puissance calorifique est effectuée à l'aide d'une conductance thermique qui convertit le flux calorifique en élévation de température par rapport à une température de référence. L'élévation de température ainsi déterminée est convertie en un signal électrique par un élément dit "élément thermométrique".

Un détecteur bolométrique selon l'art connu est décrit dans l'article intitulé "Antenna-coupled bolometer with a micromachined - beam thermal link" et paru dans la revue "Appl. Phys. Letter. 71 (16)" datée du 20 octobre 1997.

Un tel détecteur bolométrique comprend :
- une antenne réceptrice pour recueillir les ondes électromagnétiques,
- une charge résistive pour convertir la puissance électromagnétique recueillie en puissance calorifique,
- une ligne ou guide de transmission pour transmettre les ondes électromagnétiques reçues par l'antenne vers la charge résistive,
- des moyens de mesure de la puissance calorifique.

La présence de la ligne ou guide de transmission entre l'antenne réceptrice et la charge résistive présente plusieurs inconvénients. Un premier inconvénient est de participer de manière non négligeable à l'encombrement du détecteur bolométrique. Un autre inconvénient est la difficulté qu'il y a à réaliser une telle ligne ou guide pour des circuits à fréquences élevées telles que, par exemple, des fréquences au-delà de 50 GHz.

L'invention ne présente pas ces inconvénients.

L'invention concerne un détecteur bolométrique comprenant une antenne réceptrice pour recueillir des ondes électromagnétiques, l'antenne réceptrice ayant une résistance de charge, une charge résistive pour convertir la puissance des ondes électromagnétiques reçues en puissance calorifique et des moyens de mesure de la puissance calorifique. L'invention comprend en outre un élément thermométrique pour mesurer l'élévation de température, par rapport à une température de référence, associée à la puissance calorifique. La charge résistive est constituée par la résistance de charge de l'antenne réceptrice. De plus, l'élément thermométrique est électriquement isolé de la résistance de charge de l'antenne.

L'invention concerne également un procédé de fabrication de détecteur bolométrique comprenant une antenne de réception et un élément thermométrique. Le procédé de fabrication comprend les étapes suivantes :
- une étape permettant de réaliser une structure constituée de l'empilement d'un substrat silicium, d'une couche d'oxyde et d'une couche de silicium,
- une étape permettant de réaliser une zone dopée dans la couche de silicium de façon à constituer l'élément thermométrique sous forme de diode et à recouvrir la couche de silicium d'une couche d'oxyde de silicium,
- une étape permettant de réaliser des contacts électriques de la diode,
- une étape permettant de réaliser, par dépôt métallique sur la couche d'oxyde de silicium, les éléments métalliques constituant l'antenne de réception,
- une étape consistant en la gravure sèche des couches d'oxyde et de silicium de façon à définir une zone évidée qui localise la diode,
- une étape consistant à déposer une couche de passivation et à graver cette couche pour laisser libre d'accès les contacts électriques de la diode et des zones de reprise de contact électrique des éléments métalliques d'antenne,
- une étape consistant à déposer une couche conductrice sur les contacts électriques de la diode, sur les zones de reprise de contact électrique des éléments métalliques d'antenne et sur la zone évidée qui localise la diode,
- une étape d'élimination de l'oxyde situé sous la diode et sous la zone évidée qui localise la diode de façon à créer une cavité.

Selon le mode de réalisation préférentiel de l'invention, un microbolomètre en silicium est associé à une antenne quadripolaire plane disposée sur une cavité diélectrique constituée par le support en silicium lui-même et résonnante aux fréquences d'utilisation. Une telle configuration est particulièrement bien adaptée à la réalisation d'un plan focal complexe de structure matricielle nxm pixels rendant possible l'intégration d'un circuit de lecture ayant une faible dissipation. Par faible dissipation, il faut entendre, par exemple, une dissipation inférieure à 100 mW pour une matrice 32x32.

### Brève description des figures

D'autres caractéristiques et avantages de l'invention apparaîtront à la lecture d'un mode de réalisation préférentiel de l'invention fait en référence aux figures ci-annexées parmi lesquelles :
- la figure 1 représente une vue de dessus d'un détecteur bolométrique selon l'invention,
- la figure 2 représente une vue en coupe simplifiée du détecteur bolométrique selon la figure 1,
- la figure 3 représente une vue de dessus de l'association de quatre détecteurs bolométriques selon un premier mode de réalisation de l'invention,
- la figure 4 représente une vue de dessus de l'association de quatre détecteurs bolométriques selon un deuxième mode de réalisation de l'invention,
- la figure 5 représente une vue de détail d'un perfectionnement de détecteur bolométrique dans le cas d'une association de détecteurs bolométriques selon le deuxième mode de réalisation de l'invention,
- les figures 6A à 6H représentent un procédé de fabrication de détecteur bolométrique selon l'invention,
- la figure 7 représente un perfectionnement du procédé de fabrication de détecteur bolométrique selon les figures 6A et 6H.

Sur toutes les figures les mêmes repères désignent les mêmes éléments.

### Description détaillée de modes de mise en oeuvre de l'invention

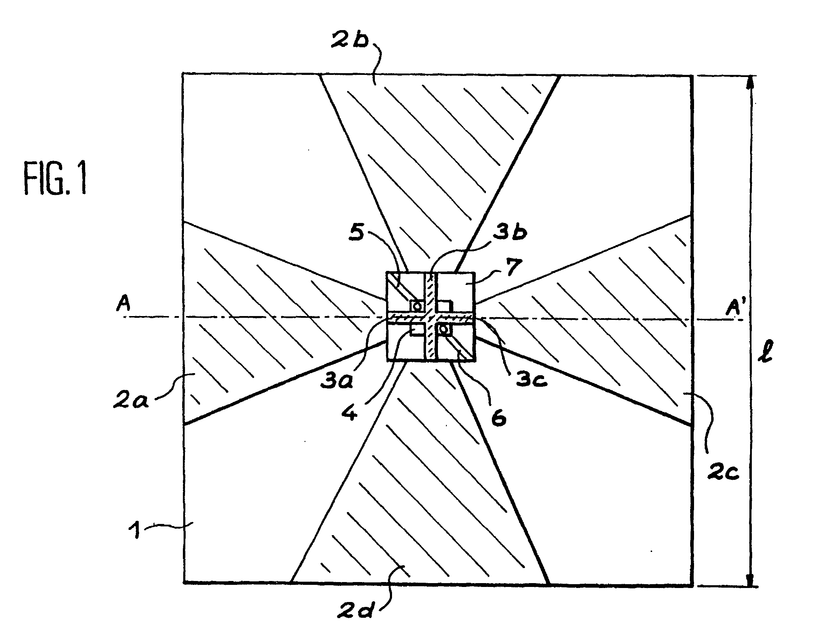

La figure 1 représente une vue de dessus d'un détecteur bolométrique selon l'invention.

Quatre éléments métalliques plans 2a, 2b, 2c, 2d reposent sur une couche de silicium 1. Ces quatre éléments sont disposés, préférentiellement, en forme de croix autour d'une partie centrale évidée 7. Les éléments métalliques 2a et 2c sont alignés selon un axe AA' et les éléments métalliques 2b et 2d sont alignés selon un axe perpendiculaire à l'axe AA'.

Dans la partie centrale évidée 7, une structure conductrice en forme de croix à quatre bras 3a, 3b, 3c, 3d permet de relier entre eux les quatre éléments métalliques 2a, 2b, 2c, 2d. Les bras 3a et 3c sont alignés selon l'axe AA' et les bras 3b et 3d selon l'axe perpendiculaire à l'axe AA'.

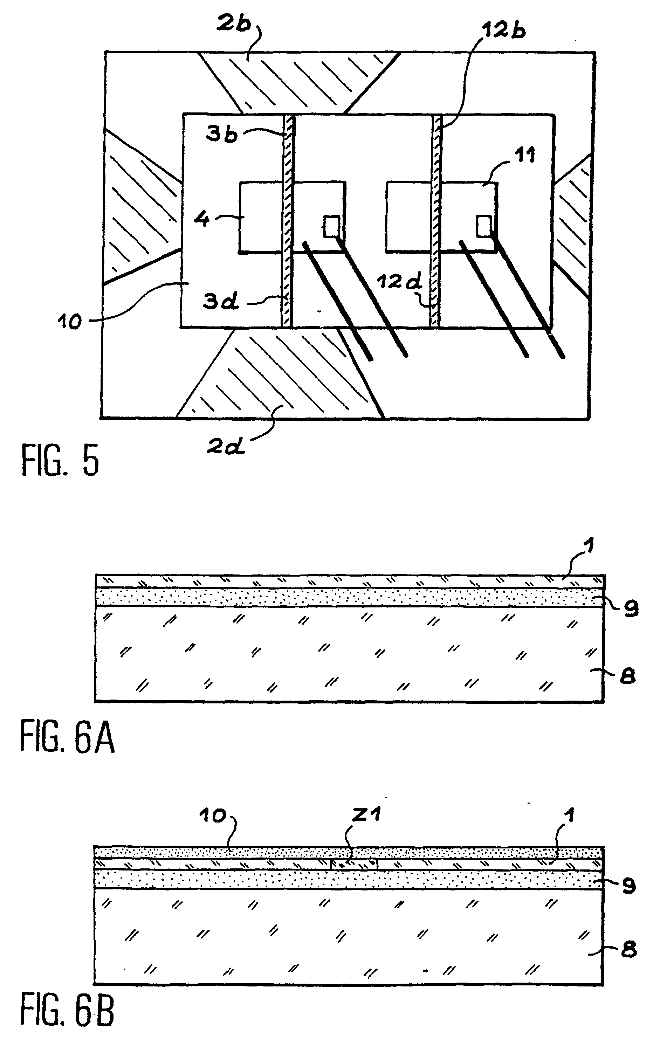

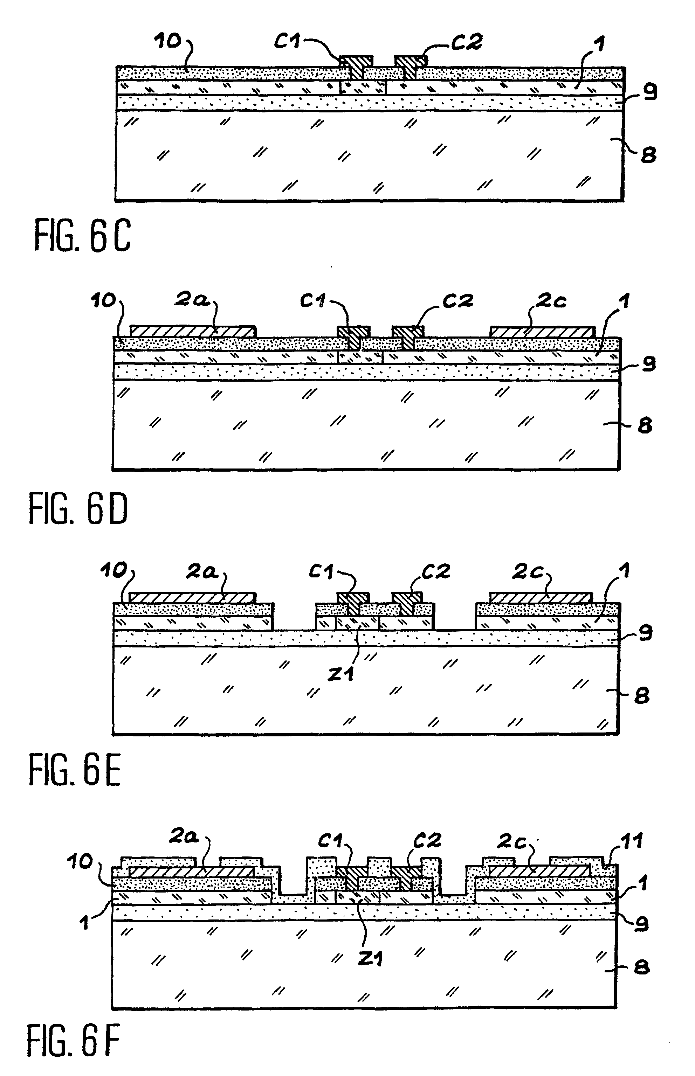

Les quatre bras métalliques 3a, 3b, 3c, 3d recouvrent, là où ils se croisent, une diode 4. La diode 4 est réalisée comme décrit plus loin (cf. description figure 6a).

Les quatre éléments métalliques plans 2a, 2b, 2c, 2d constituent l'antenne permettant de recevoir le signal. Selon l'invention, les éléments métalliques 2a, 2b, 2c, 2d constituent également la charge résistive permettant de convertir la puissance des ondes électromagnétiques en puissance calorifique.

La puissance calorifique ainsi dissipée dans les éléments métalliques d'antenne conduit à un échauffement des bras 3a, 3b, 3c, 3d. L'échauffement des bras 3a, 3b, 3c, 3d conduit à l'échauffement de la diode 4. Il s'ensuit que la diode 4 constitue l'élément thermométrique du détecteur bolométrique. L'élément thermométrique (diode 4) est électriquement isolé du circuit d'antenne (éléments métalliques d'antenne et charges associées).

En l'absence de détection d'ondes électromagnétiques, la diode est parcourue par un courant de référence Iref. Lorsqu'une onde électromagnétique est détectée, la diode 4 s'échauffe et le courant qui la parcourt diffère du courant I_{ref}. Des métallisations 5 et 6 permettent de relier les deux bornes de la diode 4 à un circuit de traitement (non représenté sur la figure) des variations du courant qui parcourt la diode.

La diode 4 est implantée dans une pastille de silicium comme indiqué en figure 6A. On obtient ainsi un détecteur présentant une très faible masse calorifique pour un fonctionnement à température ambiante, un haut isolement thermique obtenu par le métal résistif des éléments 3a, 3b, 3c, 3d et une haute performance en bruit basse fréquence du fait de l'utilisation d'une diode thermométrique sur silicium monocristallin

Vu de dessus, le détecteur bolométrique représenté en figure 1 constitue un carré de cote ℓ. Selon le mode de réalisation préférentiel de l'invention, la cote ℓ est égale à λ/2, λ étant la longueur d'onde d'une onde pour laquelle une détection est souhaitée.

Dans le cas de signaux à détecter compris dans une bande de fréquences, la côte ℓ est, préférentiellement, égale à λ/2, λ étant à la longueur d'onde de l'onde qui a pour fréquence la fréquence centrale de la bande de fréquences.

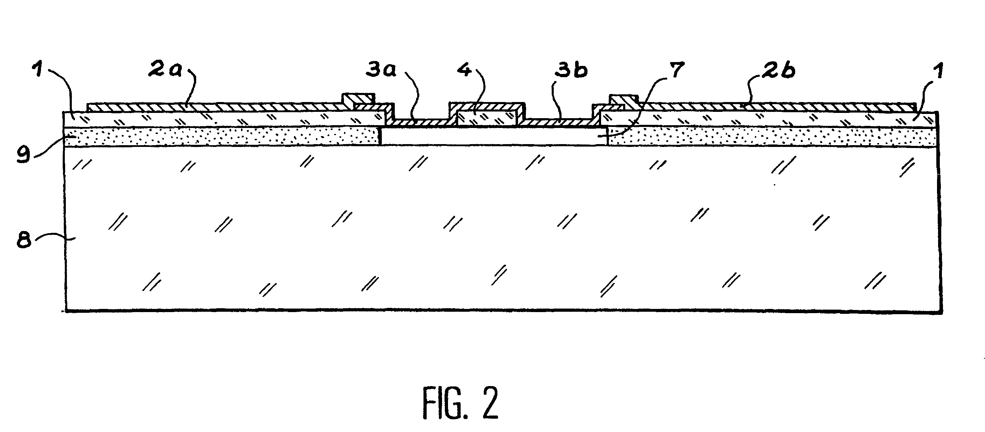

La figure 2 représente une vue en coupe simplifiée du détecteur bolométrique selon la figure 1. La coupe est faite selon l'axe AA' de la figure 1.

La structure de la figure 2 est composée d'un substrat silicium 8 sur lequel sont successivement empilés une couche d'oxyde, une couche de silicium 1 et les éléments métalliques 2a, 2b formant antenne.

Les couches d'oxyde 9 et de silicium 1 sont évidées dans leur partie centrale 7 de façon à permettre la suspension, sur l'évidément ainsi réalisé, des bras 3a et 3b ainsi que de la diode 4.

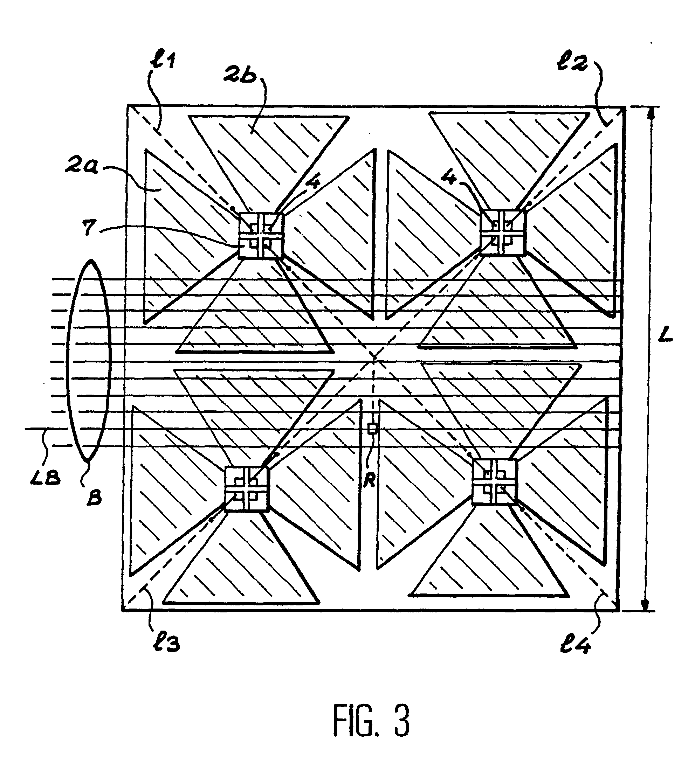

La figure 3 représente une vue de dessus de l'association de quatre détecteurs bolométriques selon un premier mode de réalisation de l'invention.

Les quatre détecteurs sont placés côte à côte de façon à constituer, en vue de dessus, un carré de côté L.

Selon le mode de réalisation préférentiel de l'invention, le côté L a pour longueur la longueur d'onde λ d'une onde pour laquelle la détection est souhaitée. Dans le cas de signaux à détecter compris dans une bande de fréquences, la cote L est, préférentiellement, égale à la longueur d'onde de l'onde qui a pour fréquence la fréquence centrale de la bande de fréquences. Selon ce mode de réalisation de l'invention, il n'est alors pas nécessaire d'associer un cornet à chaque détecteur bolométrique. Ce mode de réalisation est particulièrement avantageux puisqu'un cornet d'antenne est une structure à trois dimensions relativement encombrante et non entièrement réalisable par micro-usinage du silicium.

L'invention concerne cependant également le cas où chaque détecteur constitue lui-même un carré dont le côté ℓ a pour longueur la longueur d'onde λ. Il s'ensuit que l'association de quatre détecteurs telle que celle de la figure 3 constitue une structure dont le côté L vaut sensiblement 2λ.

Selon le mode de réalisation préférentiel de l'invention, les quatre diodes thermométriques sont montées en parallèle.

Comme cela a été décrit précédemment (cf. figure 1), chaque diode 4 est pourvue d'une première borne et d'une deuxième borne. Les liaisons conductrices entre les bornes des différentes diodes sont représentées en traits discontinus sur la figure 3.

Un premier ensemble de liaisons converge vers le centre du détecteur et relie les premières bornes des différentes diodes. Une reprise de contact R permet que soit établi un contact électrique entre les différentes liaisons de ce premier ensemble et une ligne de connexion L_{B} du bus B.

Un deuxième ensemble de liaisons ℓ1, ℓ2, ℓ3, ℓ4 permet de relier à une même référence électrique telle que, par exemple, le substrat, les deuxièmes bornes de chaque diode.

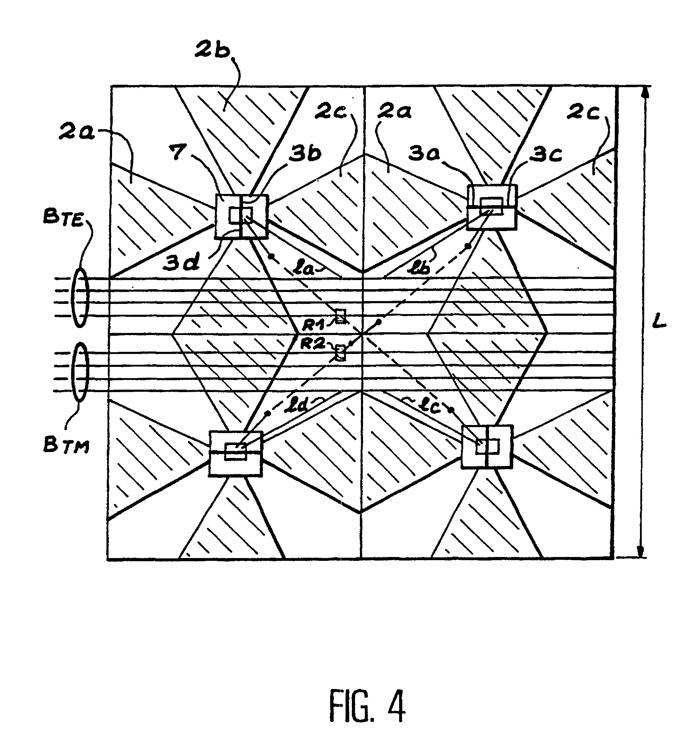

La figure 4 représente une association de quatre détecteurs bolométriques selon un deuxième mode de réalisation de l'invention.

Selon ce deuxième mode de réalisation de l'invention, les ondes recueillies sont de type TE et TM. Comme cela est connu de l'homme de l'art l'abréviation TE provient de l'expression "Transverse Electrique" et l'abréviation TM de l'expression "Transverse Magnétique".

Selon ce mode de réalisation, la structure conductrice située dans la partie centrale 7 de chaque détecteur bolométrique et qui recouvre partiellement chaque diode 4 comprend seulement deux bras permettant de relier deux des quatre éléments métalliques de l'antenne situés en vis-à-vis. En référence aux notations de la figure 1, si la structure conductrice d'un premier détecteur bolométrique comprend deux bras métalliques 3b, 3d reliés aux éléments métalliques d'antenne 2b et 2d, alors les bras métalliques 3a, 3c des structures conductrices des deux détecteurs bolométriques qui ont une face en commun avec le premier détecteur bolométrique sont reliées aux éléments métalliques d'antenne 2a, 2c.

De même que dans le cas de la figure 3, les quatre détecteurs bolométriques sont placés côte à côte de façon à constituer, en vue de dessus, un carré de côté L.

Les deux détecteurs bolométriques situés selon une première diagonale du carré permettent de recueillir des ondes d'un premier type, par exemple de type TM, et les deux détecteurs bolométriques situés selon la diagonale perpendiculaire à la première diagonale permettent de recueillir des ondes d'un deuxième type, par exemple de type TE.

Un ensemble de liaisons conductrices (lignes en traits discontinus et les lignes en traits continus ℓa, ℓb, ℓc, ℓd) permet de faire un montage parallèle, d'une part, des deux diodes associées aux deux détecteurs qui recueillent des ondes de type TM et, d'autre part, des deux diodes associées aux deux détecteurs qui recueillent des ondes de type TE.

Un bus de connexion B_{TE} permet une reprise R₁ des contacts électriques qui correspondent aux deux diodes montées en parallèle associées aux deux détecteurs qui recueillent les ondes de type TE. De même, un bus de connexion B_{TM} permet une reprise R₂ des contacts électriques qui correspondent aux deux diodes montées en parallèle associées aux deux détecteurs qui recueillent les ondes de type TM.

Avantageusement, l'invention selon ce deuxième mode de réalisation permet, du fait d'une imagerie à double polarisation TE et TM, de recueillir des informations riches d'enseignements sur la nature de matériaux polarisants pouvant être observés.

La figure 5 représente une vue de détail d'un perfectionnement de détecteur bolométrique dans le cas d'une association de détecteurs bolométriques selon le deuxième mode de réalisation de l'invention.

La figure 5 représente une partie centrale évidée 10 de détecteur bolométrique. La partie centrale 10 comprend deux diodes 4 et 11. La diode 4 est partiellement recouverte de deux bras conducteurs 3b, 3d reliés aux éléments métalliques d'antenne 2b, 2d. Parallèlement à la diode 4 est située une diode 11 partiellement recouverte de deux bras conducteurs 12b, 12d. Les deux bras conducteurs 12b et 12d sont électriquement isolés et reliés à la référence thermique que constitue le substrat silicium 8.

Les diodes 4 et 11 sont polarisées dans les mêmes conditions et peuvent travailler soit en tension, soit en courant.

Une telle configuration permet, par lecture différentielle des signaux issus des diodes, l'élimination de tout ou partie des signaux parasites que reçoit le détecteur bolométrique. En particulier, les signaux situés dans la bande de l'infrarouge thermique peuvent être avantageusement éliminés. De même, tout ou partie des fluctuations ou dérives parasites de la température de référence du détecteur bolométrique peuvent être éliminées.

Les figures 6A à 6H représentent un procédé de fabrication de détecteur bolométrique selon un premier mode de réalisation de l'invention.

La figure 6A représente la réalisation d'une structure constituée de l'empilement d'un substrat silicium 8, d'une couche d'oxyde 9, par exemple de type SIMOX, et d'une couche de silicium 1, par exemple épitaxiée ou déposée par report. La couche de silicium 1 est, par exemple, une couche de quelques dixièmes de microns d'épaisseur.

La figure 6B représente la réalisation d'une zone Z1 dopée dans la couche de silicium 1 et le recouvrement de cette dernière par une couche d'oxyde de silicium 10. La zone 21 est réalisée, de façon connue en soi, par implantation localisée.

La figure 6C représente la réalisation des contacts électriques C1 et C2 de la diode thermométrique du détecteur bolométrique. Les ouvertures permettant de réaliser les contacts C1 et C2 sont réalisées par gravure de la couche d'oxyde 10. Les contacts C1 et C2 sont réalisés par dépôt et gravure de métal.

La figure 6D représente la réalisation des éléments métalliques (2a, 2b, 2c, 2d) qui constituent l'antenne du détecteur. Le métal des antennes est préférentiellement de faible résistivité électrique. La résistance entre les points extrêmes d'un même élément métallique d'antenne peut ainsi valoir, par exemple, quelques Ohms. Chaque élément métallique peut, par exemple, être constitué de trois couches métalliques successives : une première couche, par exemple du chrome ou du titane, permet de garantir une bonne adhérence sur l'oxyde, une deuxième couche, par exemple du nickel ou du palladium, permet de réaliser une barrière de diffusion pour la troisième couche qui peut être, par exemple, en or.

La figure 6E représente l'opération permettant de définir la zone qui localise la diode thermométrique du détecteur. A cette fin, on procède à une gravure sèche en face avant de, successivement, la couche d'oxyde 10 et la couche de silicium 1.

L'étape représentée en figure 6F consiste à déposer une couche de passivation 11 et à graver cette couche pour laisser libre d'accès des zones de reprise de contact électrique sur la diode thermométrique et sur les éléments métalliques d'antenne.

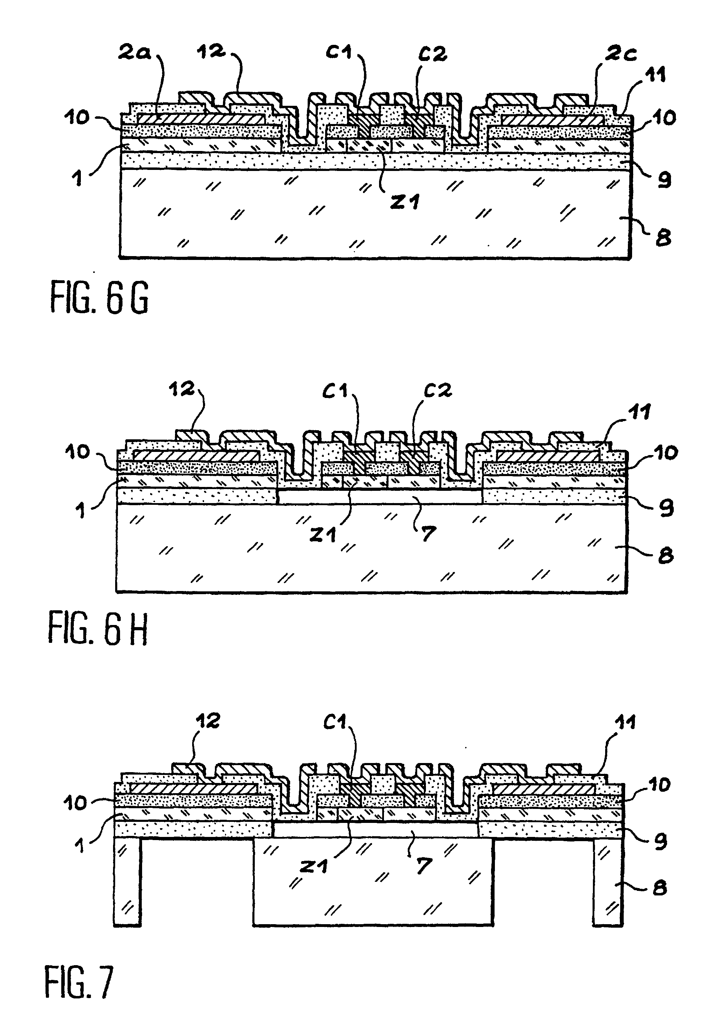

L'étape représentée en figure 6G consiste à déposer et graver le conducteur 12 de la structure conductrice qui peut être, par exemple, un nitrure de métal tel que le nitrure de titane ou le nitrure de tungstène.

L'étape représentée en figure 6H consiste à éliminer, de façon connue en soi, l'oxyde sous la diode thermométrique et sous la zone qui localise la diode thermométrique de façon à créer la cavité 7.

La figure 7 représente un perfectionnement du procédé de fabrication de détecteur bolométrique selon les figures 6A à 6H.

Selon ce perfectionnement, le substrat silicium 8 est gravé en face arrière sous les éléments métalliques d'antenne. Cette gravure permet de modifier les dimensions de la cavité résonnante que constitue le substrat silicium 8. Cette modification induit avantageusement un élargissement de la bande spectrale d'absorption du détecteur.

Comme cela a été mentionné précédemment, l'invention s'applique plus particulièrement à la détection d'ondes électromagnétiques de longueurs d'ondes millimétriques. Les fréquences des ondes électromagnétiques détectées sont, par exemple, les fréquences comprises dans les bandes de transparence de l'atmosphère, c'est-à-dire les fréquences centrées autour de 94 GHz, 140 GHz ou encore 220 GHz.

La transmission atmosphérique dans les bandes de fréquences mentionnées ci-dessus est de qualité supérieure à la transmission atmosphérique en bande infrarouge. Il s'ensuit avantageusement, selon l'invention, la possibilité de détecter des objets dans des conditions "tout-temps" (pluie, brouillard, fumée, etc...).

## Revendications

1. Détecteur bolométrique comprenant au moins une antenne réceptrice (2a, 2b, 2c, 2d) pour recueillir des ondes électromagnétiques, l'antenne réceptrice ayant une résistance de charge, une charge résistive pour convertir la puissance des ondes électromagnétiques en puissance calorifique, un élément thermométrique (4) pour mesurer l'élévation de température, par rapport à une température de référence, associée à la puissance calorifique, **caractérisé en ce que** la charge résistive est constituée par la résistance de charge de l'antenne et **en ce que** l'élément thermométrique est électriquement isolé de la résistance de charge de l'antenne.

2. Détecteur bolométrique selon la revendication 1, **caractérisé en ce que** l'élément thermométrique est une diode (4).

3. Détecteur bolométrique selon la revendication 2, **caractérisé en ce que** l'antenne réceptrice est composée de quatre éléments métalliques séparés (2a, 2b, 2c, 2d) disposés en forme de croix autour d'une partie centrale (7) de façon que deux premiers éléments métalliques soient alignés selon un premier axe (AA') et les deux autres soient alignés selon un axe perpendiculaire au premier axe (AA'), les éléments métalliques (2a, 2b, 2c, 2d) étant disposés sur une couche de silicium (1), la couche de silicium présentant au niveau de la partie centrale (7) un évidement de façon que la diode (4) se trouve suspendue au-dessus d'un substrat silicium (8), **en ce qu'**il comprend des moyens permettant de suspendre la diode (4) constitués d'au moins un ensemble de deux bras métalliques (3a, 3c) un premier bras métallique (3a) étant relié à un premier élément métallique (2a) et le deuxième bras métallique (3c) étant relié à l'élément métallique (2c) qui est aligné avec le premier élément métallique (2a).

4. Détecteur bolométrique selon la revendication 3, **caractérisé en ce que** l'antenne réceptrice, la diode (4) qui constitue l'élément thermométrique et les moyens permettant de suspendre la diode (4) définissent, en vue de dessus, un encombrement de forme carrée, le côté du carré ayant une longueur sensiblement égale à la longueur d'onde de l'onde détectée.

5. Détecteur bolométrique selon la revendication 3, **caractérisé en ce que** l'antenne réceptrice, la diode (4) qui constitue l'élément thermométrique et les moyens permettant de suspendre la diode (4) définissent, en vue de dessus, un encombrement de forme carrée, le côté du carré ayant une longueur sensiblement égale à la moitié de la longueur d'onde de l'onde détectée.

6. Dispositif d'imagerie comprenant au moins un détecteur bolométrique, **caractérisé en ce que** le décecteur bolométrique est un détecteur selon l'une quelconque des revendications 1 à 5,

7. Dispositif d'imagerie selon la revendication 6, **caractérisé en ce qu'**il comprend au moins un ensemble de quatre détecteurs bolométriques disposés côte à côte et dont les diodes (4) sont montées en parallèle.

8. Dispositif d'imagerie selon la revendication 6, **caractérisé en ce qu'**il comprend au moins un ensemble de quatre détecteurs bolométriques disposés côte à côte, deux premiers détecteurs bolométriques permettant de recueillir des ondes de type TE et les deux autres permettant de recueillir des ondes de type TM, les diodes (4) des deux premiers détecteurs bolométriques étant associées selon un premier montage parallèle et les diodes des deux autres détecteurs bolométriques étant associées selon un second montage parallèle.

9. Dispositif d'imagerie selon la revendication 8, **caractérisé en ce que** chaque détecteur bolométrique comprend une deuxième diode (11) placée au voisinage de la diode (4) qui constitue l'élément thermométrique, la deuxième diode (11) permettant, par lecture différentielle des signaux qu'elle génère et des signaux issus de la diode (4) qui constitue l'élément thermométrique, l'élimination de tout ou partie des signaux parasites reçus par le détecteur bolométrique.

10. Procédé de fabrication de détecteur bolométrique comprenant une antenne de réception et un élément thermométrique, **caractérisé en ce qu'**il comprend les étapes suivantes :
- une étape permettant de réaliser une structure constituée de l'empilement d'un substrat silicium (8), d'une couche d'oxyde (9) et d'une couche de silicium épitaxié (1),
- une étape permettant de réaliser une zone (Z1) dopée dans la couche de silicium (1) de façon à constituer l'élément thermométrique sous forme de diode (4) et à recouvrir la couche de silicium (1) d'une couche d'oxyde de silicium (10),
- une étape permettant de réaliser des contacts électriques (C1, C2) de la diode (4),
- une étape permettant de réaliser, par dépôt métallique sur la couche d'oxyde de silicium (10), les éléments métalliques (2a, 2b, 2c, 2d) constituant l'antenne de réception,
- une étape consistant en la gravure sèche des couches d'oxyde (10) et de silicium (1) de façon à définir une zone évidée qui localise la diode (4),
- une étape consistant à déposer une couche de passivation (11) et à graver cette couche (11) pour laisser libre d'accès les contacts électriques (C1, C2) de la diode (4) et des zones de reprise de contact électrique des éléments métalliques d'antenne,
- une étape consistant à déposer une couche conductrice (12) sur les contacts électriques (C1, C2) de la diode (4), sur les zones de reprise de contact électrique des éléments métalliques d'antenne et sur la zone évidée qui localise la diode (4),
- une étape d'élimination de l'oxyde située sous la diode (4) et sous la zone évidée qui localise la diode (4) de façon à créer une cavité (7).

11. Procédé de fabrication de détecteur bolométrique selon la revendication 10, **caractérisé en ce qu'**il comprend une étape supplémentaire consistant à graver le substrat silicium (8) sous les éléments métalliques d'antenne.

## Claims

1. A bolometric detector comprising at least a receiving antenna (2a, 2b, 2c, 2d) for collecting electromagnetic waves, the receiving antenna having a load resistance, a resistive load for converting the power from the electromagnetic waves into heating power, a thermometric component (4) for measuring the rise in temperature, relatively to a reference temperature, associated with the heating power, **characterized in that** the resistive load is formed by the load resistance of the antenna and **in that** the thermometric component is electrically insulated from the load resistance of the antenna.

2. The bolometric detector according to claim 1, **characterized in that** the thermometric component is a diode (4).

3. The bolometric detector according to claim 2, **characterized in that** the receiving antenna consists of four metal separate components (2a, 2b, 2c, 2d) arranged in the shape of a cross around a central portion (7) so that the first two metal components are aligned along a first axis (AA') and the two other ones are aligned according to an axis perpendicular to the first axis (AA'), wherein the metal components (2a, 2b, 2c, 2d) are arranged on a silicon layer (1), the silicon layer has, at the central portion (7), a recess so that diode (4) is hung above a silicon substrate (8), **in that** it comprises means for hanging the diode (4) comprising at least a set of two metal arms (3a, 3c), wherein a first metal arm (3a) is connected to a first metal component (2a) and the second metal arm (3c) is connected to the metal component (2c) which is aligned with the first metal component (2a).

4. The bolometric detector according to claim 3, **characterized in that** the receiving antenna, the diode (4) which comprises the thermometric component and the means for hanging the diode (4), define, as seen from above, an occupied space with a square shape, wherein the side of the square has a length substantially equal to the wavelength of the detected wave.

5. The bolometric detector according to claim 3, **characterized in that** the receiving antenna, the diode (4) which comprises the thermometric component and the means for hanging the diode (4), define, as seen from above, an occupied space with a square shape, wherein the side of the square has a length substantially equal to the half of the wavelength of the detected wave.

6. An imaging device comprising at least a bolometric detector, **characterized in that** the bolometric detector is a detector according to any of claims 1 to 5.

7. The imaging device according to claim 6, **characterized in that** it comprises at least a set of four bolometric detectors arranged side by side and the diodes (4) of which are mounted in parallel.

8. The imaging device according to claim 6, **characterized in that** it comprises at least a set of four bolometric detectors arranged side by side and the diodes (4) of which are mounted in parallel, two first bolometric detectors for collecting waves of the TE type and two other ones for collecting waves of the TM type, wherein diodes (4) of the first two bolometric detectors are associated according to a first parallel circuit and the diodes of the two other bolometric detectors are associated according to a second parallel circuit.

9. The imaging device according to claim 8, **characterized in that** each bolometric detector comprises a second diode (11) placed in the vicinity of diode (4) which forms the thermometric component, wherein the second diode (11) enables all or part of the parasitic signals received by the bolometric detector to be removed through differential readout of the signals which it generates and of the signals derived from diode (4).

10. A method for manufacturing a bolometric detector comprising a receiving antenna and a thermometric component, **characterized in that** it consists in the following steps:
- a step for producing a structure formed by the stacking of a silicon substrate (8), an oxide layer (9) and a silicon layer (1) grown by epitaxy,
- a step for producing a doped area (Z1) in the silicon layer (1) in order to form the thermometric component as a diode (4) and to cover the silicon layer (1) with a silicon oxide layer (10),
- a step for producing the electric contacts (C1, C2) of the diode (4),
- a step for producing, by depositing a metal on the silicon oxide layer (10), the metal components (2a, 2b, 2c, 2d) forming the receiving antenna,
- a step consisting of dry etching the oxide (10) and the silicon (1) layers in order to define a recessed area which localizes the diode (4),
- a step consisting of depositing a passivation layer (11) and of etching this layer (11) in order to leave free access to the electric contacts (C1, C2) of diode (4) and areas for recovering electric contact with the antenna metal components,
- a step consisting of depositing a conducting layer (12) on the electric contacts (C1, C2) of diode (4), on the areas for recovering electric contact with the antenna metal components and on the recessed area which localizes the diode (4),
- a step for removing the oxide located under the diode (4) and under the recessed area which localizes the diode (4) in order to create a cavity (7).

11. Method for manufacturing a bolometric detector according to claim 10, **characterized in that** it comprises an extra step consisting of etching the silicon substrate (8) under the antenna metal components.

## Patentansprüche

1. Bolometrischer Detektor mit wenigstens einer Empfangsantenne (2a, 2b, 2c, 2d), um elektromagnetische Wellen zu empfangen, wobei die Empfangsantenne einen Belastungswiderstand, eine resistive Last zur Umwandlung der Leistung der elektromagnetischen Wellen in Wärmeleistung und ein thermometrisches Element (4) umfasst, um die mit der Wärmeleistung verbundene Temperaturerhöhung in Bezug auf eine Referenztemperatur zu messen,
**dadurch gekennzeichnet,**
**dass** die resistive Last durch den Belastungswiderstand der Antenne gebildet wird, und dadurch, dass das thermometrische Element von dem Belastungswiderstand der Antenne elektrisch isoliert ist.

2. Bolometrischer Detektor nach Anspruch 1, **dadurch gekennzeichnet, dass** das thermometrische Element (4) eine Diode ist.

3. Bolometrischer Detektor nach Anspruch 2, **dadurch gekennzeichnet, dass** die Empfangsantenne durch vier getrennte Metallelemente (2a, 2b, 2c, 2d) gebildet wird, kreuzförmig angeordnet um einen zentralen Teil (7), so dass zwei erste Metallelemente gemäß einer ersten Achse (AA') ausgerichtet sind und die beiden anderen gemäß einer zu der ersten Achse (AA') senkrechten Achse ausgerichtet sind, wobei die Metatlelemente (2a, 2b, 2c, 2d) auf einer Siliciumschicht (1) angebracht sind und diese Siliciumschicht in Höhe des zentralen Teils (7) eine Aussparung aufweist, so dass die Diode (4) über einem Siliciumsubstrat (8) aufgehängt ist, und dadurch, dass er Einrichtungen umfasst, gebildet durch wenigstens ein System von zwei metallischen Armen (3a, 3c), die ermöglichen, die Diode (4) aufzuhängen, wobei ein erster metallischer Arm (3a) mit einem ersten Metallelement (2a) verbunden ist und der zweite metallische Arm (3c) mit einem Metallelement (2c) verbunden ist, das mit dem ersten Metallelement (2a) ausgerichtet ist.

4. Bolometrischer Detektor nach Anspruch 3, **dadurch gekennzeichnet, dass** die Empfangsantenne, die das thermometrische Element bildende Diode (4) und die Einrichtungen, die ermöglichen, die Diode (4) aufzuhängen, in der Draufsicht Hauptabmessungen von quadratischer Form definieren, wobei die Seiten des Quadrats eine Länge im Wesentlichen gleich der Wellenlänge der detektierten Welle haben.

5. Bolometrischer Detektor nach Anspruch 3, **dadurch gekennzeichnet, dass** die Empfangsantenne, die das thermometrische Element bildende Diode (4) und die Einrichtungen, die ermöglichen, die Diode (4) aufzuhängen, in der Draufsicht Hauptabmessungen von quadratischer Form definieren, wobei die Seiten des Quadrats eine Länge im Wesentlichen gleich der halben Wellenlänge der detektierten Welle haben.

6. Bildherstellungsvorrichtung mit wenigstens einem bolometrischen Detektor, **dadurch gekennzeichnet, dass** der bolometrische Detektor ein Detektor nach einem der Ansprüche 1 bis 5 ist.

7. Bildherstellungsvorrichtung nach Anspruch 6, **dadurch gekennzeichnet, dass** sie wenigstens eine Gruppe von vier bolometrischen Detektoren umfasst, die Seite an Seite angeordnet sind und deren Dioden (4) paratlelgeschaltet sind.

8. Bildherstellungsvorrichtung nach Anspruch 6, **dadurch gekennzeichnet, dass** sie wenigstens eine Gruppe von vier bolometrischen Detektoren umfasst, die Seite an Seite angeordnet sind, wobei zwei erste bolometrische Detektoren ermöglichen, Wellen des ET-Typs zu empfangen, und die beiden anderen ermöglichen, Wellen des MT-Typs zu empfangen, wobei die Dioden (4) der beiden ersten bolometrischen Detektoren gemäß einer ersten Parallelschaltung verbunden sind und die Dioden der beiden anderen bolometrischen Detektoren gemäß einer zweiten Parallelschaltung verbunden sind.

9. Bildherstellungsvorrichtung nach Anspruch 8, **dadurch gekennzeichnet, dass** jeder bolometrische Detektor eine zweite Diode (11) umfasst, angeordnet in der Nähe der das thermometrische Element bildenden Diode (4), wobei die zweite Diode (11) durch differentielles Lesen der Signale, die sie erzeugt, und der Signale, die von der das thermometrische Element bildenden Diode (4) stammen, die Eliminierung aller oder eines Teils der Störsignale ermöglicht, die durch den bolometrischen Detektor empfangen werden.

10. Verfahren zur Fertigung eines bolometrischen Detektors mit einer Empfangsantenne und einem thermometrischen Element, **dadurch gekennzeichnet, dass** es die folgenden Schritte umfasst:
- einen Schritt zur Herstellung einer Struktur, die durch einen Stapel aus einem Siliciumsubstrat (8), einer Oxidschicht (9) und einer durch Epitaxie erzeugten Siliciumschicht (1) gebildet wird,
- einen Schritt zur Herstellung einer dotierten Zone (Z1) in der Siliciumschicht (1), um das thermometrische Element in Form einer Diode (4) zu bilden und um die Siliciumschicht (1) mit einer Siliciumdioxidschicht (10) zu bedecken,
- einen Schritt zur Herstellung der elektrischen Kontakte (C1, C2) der Diode (4),
- einen Schritt zur Herstellung der die Empfangsantenne bildenden Metallelemente (2a, 2b, 2c, 2d) auf der Siliciumdioxidschicht (10) durch Metallabscheidung,
- einen Schritt zur Trockenätzung der Oxidschicht (10) und der Siliciumschicht (1), um eine ausgesparte Zone für die Diode (4) zu definieren,
- einen Schritt um eine Passivierungsschicht (11) abzuscheiden und diese Schicht (11) so zu ätzen, dass ein freier Zugang zu den elektrischen Kontakten (C1, C2) der Diode (4) und elektrischen Kontaktaufnahmezonen der metallischen Antennenelemente gewährleistet ist,
- einen Schritt zur Abscheidung einer leitfähigen Schicht (12) auf den elektrischen Kontakten (C1, C2) der Diode (4), auf den elektrischen Kontaktaufnahmezonen der metallischen Antennenelemente und auf der ausgesparten Zone, die die Diode 4 lokalisiert bzw. eingrenzt,
- einen Schritt zur Eliminierung des Oxids, das sich unter der Diode (4) und unter der ausgesparten Zone befindet, die die Diode 4 lokalisiert bzw. eingrenzt, um einen Hohlraum (7) zu bilden.

11. Verfahren zur Fertigung eines bolometrischen Detektors nach Anspruch 10, **dadurch gekennzeichnet, dass** es einen zusätzlichen Schritt umfasst, darin bestehend, das Siliciumsubstrat (8) unter den metallischen Antennenelementen zu ätzen.
